# EUROPEAN PATENT APPLICATION

(11) **EP 3 501 623 A1**
(43) Date of publication of application: **26.06.2019**
(21) Application number: 17210477.0
(22) Date of filing: 22.12.2017
(51) Int. Cl.: B01D 53/18, B01D 47/06, B01D 53/50, F01N 3/04, F01N 13/00

(54) **COMPACT SCRUBBER AND A METHOD THEREOF**

(71) Applicant: General Electric Technology GmbH, 5400 Baden (CH)
(72) Inventor: RAHLIN, Robert, 35112 SE Vaxjo (SE); TABIKH, Alimustapha, 35112 SE Vaxjo (SE)
(74) Representative: Rüger Abel

(57) **Abstract**

A scrubber (232) includes an upper section (240) including a first end (248) having a first surface area, where the upper section (240) includes at least one spray bank (202) configured to spray a scrubbing liquid. Further, the scrubber (232) includes a lower section (246) coupled to the upper section (240) and including an inlet (254) configured to receive flue gas from an exhaust unit (206) and a baffle section (250) coupled to the inlet (254) and configured to receive the flue gas from the inlet (254) and convey the received flue gas towards the at least one spray bank (202) in the upper section (240), where the baffle section (250) and the inlet (254) are positioned within a determined surface area for a relatively compact configuration of the scrubber (232), and where the determined surface area is less than or equal to the first surface area of the first end (248) of the upper section (240).

## Description

### FIELD

Embodiments of the present specification relate generally to a scrubber for controlling air pollution, and more specifically to an engineered compact scrubber for use in marine vessels.

### BACKGROUND

Typically, marine vessels use heavy oils as fuel for marine engines. Such marine engines emit flue gas that has significant amount of pollutants, which in turn contribute to environmental and public health problems. The pollutants may include oxides of sulfur, oxides of nitrogen, hydrocarbons, heavy metals, carbon monoxide, carbon dioxide, particulate matter, and/or various other pollutants. These pollutants are harmful to the environment and humans. As a result, many ports are imposing restrictions on the use of heavy oil by the marine vessels to reduce the level of pollutant emissions from the marine engines. Consequently, the marine vessels may have to use light oils that are more expensive than the heavy oils. Moreover, the marine vessels must meet increasingly stringent emission requirements, such as allowable levels of pollutant emissions from the marine engines.

To reduce pollutant emissions from the marine engines, some of the marine vessels employ an air quality control system (AQCS) for cleaning the flue gas before releasing the flue gas to the environment. In one AQCS, a scrubber is used to remove the pollutants from the flue gas before releasing the flue gas to the environment. The scrubber includes an absorber/chamber and a side inlet. The side inlet of the scrubber is coupled to an engine exhaust of the marine engine to receive the flue gas. Further, seawater is pumped into the absorber of the scrubber and conveyed towards the flue gas to remove the pollutants from the flue gas. However, the side inlet is typically provided as a piping structure that extends from the absorber/chamber. Hence, the scrubber with such a side inlet may occupy more space in the marine vessels. Also, the side inlet may not be in line with the engine exhaust, which results in additional space requirement for coupling the inlet of the scrubber to the engine exhaust of the marine engine. Hence, this type of scrubbers may not be suitable for use in the marine vessels that have space constraints.

### BRIEF DESCRIPTION

Briefly, in accordance with one aspect of the present specification, a scrubber is presented. The scrubber includes an upper section including a first end having a first surface area, where the upper section includes at least one spray bank configured to spray a scrubbing liquid. Further, the scrubber includes a lower section operatively coupled to the upper section and including an inlet configured to receive flue gas including pollutants from an exhaust unit and a baffle section operatively coupled to the inlet and configured to receive the flue gas from the inlet and convey the received flue gas towards the at least one spray bank in the upper section, where the baffle section and the inlet are positioned within a determined surface area for relatively compact configuration of the scrubber, where the determined surface area is less than or equal to the first surface area of the first end of the upper section, and where the scrubbing liquid sprayed by the at least one spray bank is configured to remove at least a portion of the pollutants from the flue gas.

In accordance with another aspect of the present specification, a method for engineering a relatively compact configuration of a scrubber in an air quality control system is presented. The method includes providing an upper section including a first end having a first surface area, where the upper section includes at least one spray bank configured to spray a scrubbing liquid. Further, the method includes providing a lower section including an inlet and a baffle section, where the inlet and the baffle section are positioned within a determined surface area that is less than or equal to the first surface area for the relatively compact configuration of the scrubber. Also, the method includes operatively coupling the lower section to the upper section to form an integrated structure of the scrubber having the relatively compact configuration.

In accordance with yet another aspect of the present specification, a system is presented. The system includes a power source including an exhaust unit configured to convey a flue gas including pollutants. Further, the system includes a scrubber positioned proximate the power source and including an upper section including a first end having a first surface area, where the upper section includes at least one spray bank configured to spray a scrubbing liquid. Also, the scrubber includes a lower section operatively coupled to the upper section and including an inlet configured to receive the flue gas including pollutants from the exhaust unit and a baffle section operatively coupled to the inlet and configured to receive the flue gas from the inlet and convey the received flue gas towards the at least one spray bank in the upper section, where the baffle section and the inlet are positioned within a determined surface area to reduce a footprint of the scrubber, where the determined surface area is less than or equal to the first surface area of the first end of the upper section, and where the scrubbing liquid sprayed by the at least one spray bank is configured to remove at least a portion of the pollutants from the flue gas.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic side cross sectional view of a marine vessel including a scrubber, in accordance with aspects of the present specification;
FIG. 2 is a schematic side cross sectional view of one embodiment of the scrubber of FIG. 1, in accordance with aspects of the present specification;
FIG. 3 is a schematic side cross sectional view of another embodiment of the scrubber of FIG. 1, in accordance with aspects of the present specification; and
FIG. 4 is a flow chart illustrating a method for engineering a relatively compact configuration of a scrubber, in accordance with aspects of the present specification.

### DETAILED DESCRIPTION

As will be described in detail hereinafter, various embodiments of an exemplary scrubber, for removing pollutants from a flue gas, and a method for engineering a compact scrubber for use in marine vessels are presented. Moreover, use of the exemplary scrubber and methods advantageously aid in implementing an air quality control system in the marine vessels that have space constraints. In particular, use of the methods and the various embodiments of the scrubber facilitates substantial reduction in the space requirements for cleaning the flue gas in the marine vessels.

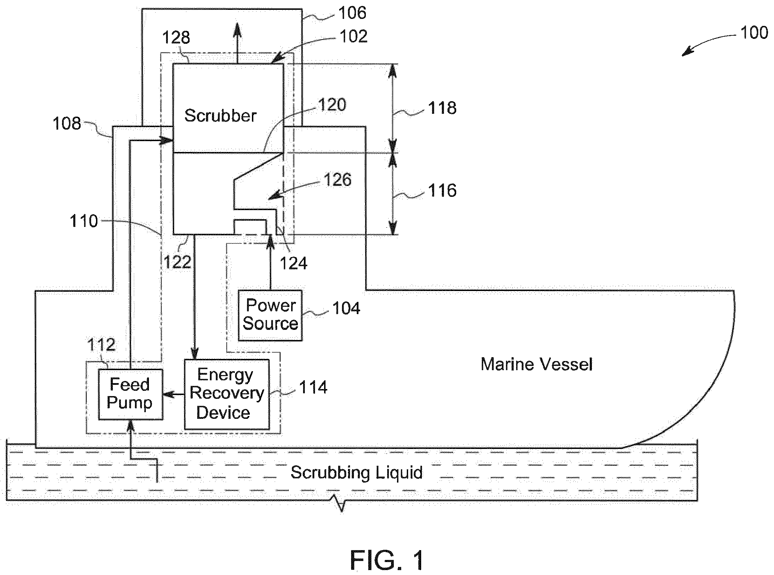

Referring to FIG. 1, a schematic side cross sectional view of a marine vessel including a scrubber, in accordance with aspects of the present specification, is depicted. The marine vessel 100 includes a power source 104. In one example, the power source 104 may be a marine diesel engine, a gas turbine engine, a steam turbine engine and boiler system, or combinations thereof. In general, the power source is configured to convert chemical energy into mechanical energy. Further, this mechanical energy may be provided to a load, such as propellers (not shown) of the marine vessel 100. The power source 104 may be located at a lower portion of the marine vessel 100 such as a lower deck or bilge of the marine vessel 100 (not shown).

As depicted in FIG. 1, the marine vessel 100 includes an exhaust stack 106. The exhaust stack 106 may be a part of a superstructure 108 of the marine vessel 100. The exhaust stack 106 is configured to receive flue gas generated by the power source 104. In one example, the flue gas may be representative of an exhaust gas that is obtained after combustion of a mixture of fuel and air in the power source 104. The flue gas includes pollutants such as oxides of sulfur, oxides of nitrogen, hydrocarbons, heavy metals, carbon monoxide, carbon dioxide, particulate matter, and/or various other pollutants. These pollutants are harmful to the environment and humans. Thus, many ports are imposing restrictions on the marine vessels to reduce the level of pollutant emissions from the power source 104.

In a presently contemplated configuration, the marine vessel 100 includes an air quality control system (AQCS) 110 that is configured to clean the flue gas so that the level of pollutants in the flue gas is substantially reduced. The AQCS 110 includes a scrubber 102 and a feed pump 112. Optionally, the AQCS 110 may include an energy recovery device 114. The scrubber 102 is configured to receive the flue gas from the power source 104 and remove at least a portion of the pollutants from the flue gas. In particular, the flue gas from the power source 104 is conveyed to the scrubber 102 via an inlet 124 that is positioned at a lower section 116 of the scrubber 102. Further, the flue gas flows upwards from the lower section 116 of the scrubber 102 to an upper section 118 of the scrubber 102.

Concurrently, the feed pump 112 is configured to pump a scrubbing fluid such as seawater or an alkaline liquid to the scrubber 102 such that the scrubbing liquid flows downwards from the upper section 118 of the scrubber 102 to the lower section 116 of the scrubber 102. As the scrubbing liquid flows downwards, the scrubbing liquid absorbs at least the portion of the pollutants in the flue gas to produce at least a partially cleaned flue gas and an effluent fluid. In one example, the effluent fluid includes a mixture of the scrubbing liquid and the portion of the pollutants absorbed or removed from the flue gas. It may be noted that the at least partially cleaned flue gas is representative of a portion of the flue gas that is devoid of the pollutants that were absorbed or removed from the flue gas. Further, the partially cleaned flue gas may flow upwards from the upper section 118 of the scrubber 102 towards an exit of the scrubber 102. Also, the partially cleaned flue gas may be released to the environment through the exhaust stack 106.

Furthermore, the effluent fluid is collected at the lower section 116 of the scrubber 102 and channeled out of the scrubber 102. In one embodiment, the effluent fluid may be channeled towards the energy recovery device 114. Also, the flow of the effluent fluid from the scrubber 102 to the energy recovery device 114 may produce kinetic energy that is provided to a generator (not shown) to operate the feed pump 112 to convey or pump fresh scrubbing liquid to the scrubber 102. This cycle of cleaning the flue gas, collecting the effluent fluid from the scrubber 102, and pumping the fresh scrubbing liquid to the scrubber is repeated to continuously clean the flow of the flue gas from the power source 104.

In accordance with exemplary aspects of the present specification, a configuration of the scrubber 102 is engineered to facilitate implementation of the AQCS 110 in the marine vessel 100 that has space constraints. In one example, the scrubber 102 may be engineered to reduce a footprint of the scrubber 102, thereby enabling use of the scrubber 102 in the AQCS 110 in the marine vessel 100. It may be noted that the footprint of the scrubber 102 is representative of a size or area occupied by the scrubber 102 in the marine vessel 100.

As depicted in FIG. 1, the upper section 118 of the scrubber 102 includes a first end 120 having a first surface area. It may be noted that the first surface area may be representative of an area occupied by the first end 120 of the upper section 118 of the scrubber 102. In one example, if the upper section 118 of the scrubber 102 is a cylindrical absorber/chamber, the first surface area of the first end 120 is *π***r*², where r is the radius of the cylindrical chamber. In one example, the first surface area may have a value in a range from about 0.5 square meter to about 5 square meters. Also, the upper section 118 of the scrubber 102 includes a second end 128 that is opposite to the first end 120 of the upper section 118. The second end 128 of the upper section 118 is positioned towards the exhaust stack 106 of the marine vessel 100.

Further, the lower section 116 of the scrubber 102 includes a baffle section 122 and the inlet 124. The baffle section 122 is coupled to the first end 120 of the upper section 118 and configured to receive the flue gas from the inlet 124. The baffle section 122 is configured to redirect and convey the received flue gas from the lower section 116 to the upper section 118 of the scrubber 102. In one embodiment, the baffle section 122 includes a plurality of baffle plates 264 that are positioned to redirect the flue gas received from the inlet 124 towards the upper section 118 of the scrubber 102.

In conventional systems, such as that disclosed in Patent No. GB 434,590, a scrubber may be a cylindrical chamber with an inlet coupled to the cylindrical chamber where the inlet extends outward with reference to a peripheral wall of the cylindrical chamber. As the inlet is an extended piping structure, the system or marine vessel may need more space to accommodate this type of scrubber. Hence, this type of scrubber may not be suitable for use in the marine vessels that have space constraints.

To overcome the shortcomings of the noted conventional system of U. S. Patent No. GB 434,590, in the exemplary scrubber 102, the inlet 124 is positioned inward with reference to a peripheral wall of the upper section 118 of the scrubber 102. More specifically, the baffle section 122 and the inlet 124 are positioned within a determined surface area to optimize a footprint of the scrubber 102. The determined surface area is less than or equal to the first surface area of the first end 120 of the upper section 118. In one example, the determined surface area is in a range from about 0.2 square meter to about 5 square meters. Accordingly, in this embodiment, the inlet 124 does not extend beyond the peripheral wall of the upper section 118 of the scrubber 102.

Moreover, to accommodate the inlet 124 within the determined surface area, in one embodiment, a portion 126 of the lower section 116 of the scrubber 102 may be removed to create a space in the lower section 116 of the scrubber 102. Further, this space is utilized for positioning the inlet 124 inward with reference to the peripheral wall of the upper section 118. Also, this arrangement aids in positioning the baffle section 122 and the inlet 124 within the determined surface area that is less than or equal to the first surface area of the first end 120 of the upper section 118. Further, with the inlet 124 being positioned inward with reference to the peripheral wall of the upper section 118, the configuration of the scrubber 102 is reduced or relatively compact to facilitate implementation of the AQCS 110 in the marine vessel 100 that has space constraints.

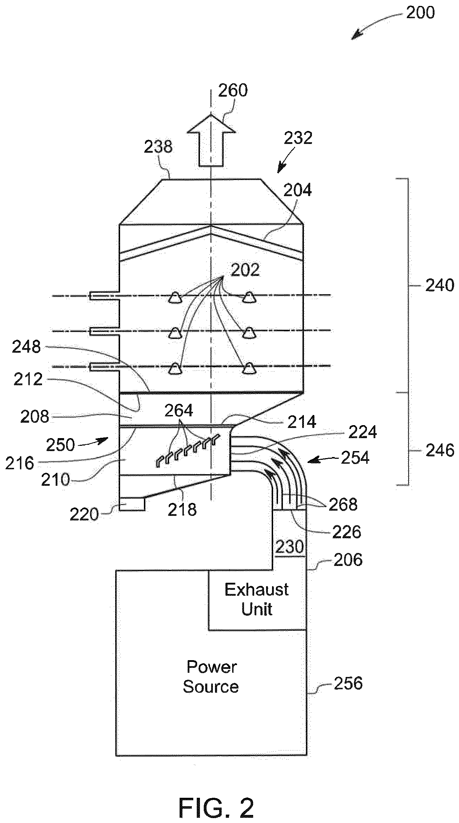

In another embodiment, a peripheral wall corresponding to one side of the lower section 116 of the scrubber 102 may be tapered or bent to create a space in the lower section 116 of the scrubber 102. Further, the inlet 124 of the scrubber 102 may be positioned within this created space of the scrubber 102 to achieve a relatively compact configuration of the scrubber 102. In one example, a surface area of this created space maybe in a range from about 30% to about 70% of the first surface area of the upper section 118. The aspect of engineering a relatively compact configuration of the scrubber 102 will be described in greater detail with reference to FIG. 2. In one embodiment, the lower section 116 and the upper section 118 of the scrubber 102 may be integrated as a single structure of the scrubber 102.

Thus, by employing the exemplary scrubber 102, space that is required for cleaning the flue gas in the marine vessels may be substantially reduced due to the reduced footprint achieved through the relatively compact configuration of scrubber 102. As a result, the AQCS 110 may be implemented in the marine vessels that have space constraints.

Turning now to FIG. 2, a schematic side cross sectional view of one embodiment of the scrubber of FIG. 1, in accordance with aspects of the present specification, is depicted. In the example of FIG. 2, a scrubber 232 includes an upper section 240 and a lower section 246. The upper section 240 includes a first end 248 and a second end 238 opposite to the first end 248 of the upper section 240. Further, the first end 248 of the upper section 240 has a corresponding first surface area. In one example, the first surface area may have a value in a range from about 0.5 square meter to about 5 square meters. Also, the lower section 246 of the scrubber 232 includes a baffle section 250 and an inlet 254. The baffle section 250 is coupled to the first end 248 of the upper section 240 and configured to receive the flue gas from the inlet 254. Also, the baffle section 250 is configured to convey the flue gas received from the lower section 246 to the upper section 240 of the scrubber 232.

As depicted in FIG. 2, the upper section 240 of the scrubber 232 includes one or more spray banks 202 and a mist eliminator 204. The spray banks 202 are configured to spray a scrubbing liquid downwards and/or upwards in the scrubber 232. In one example, the sprayed scrubbing liquid may flow from the upper section 240 to the lower section 246 of the scrubber 232. In the embodiment of FIG. 2, a series of spray banks 202 is positioned at different levels in the upper section 240 of the scrubber 232. Also, the series of spray banks 202 is coupled to a feed pump such as the feed pump 112 of FIG. 1 to receive the scrubbing liquid. The spray banks 202 are configured to spray the scrubbing liquid from the different levels in the upper section 240 towards the lower section 246 of the scrubber 232. In one example, each of the spray banks 202 includes a nozzle to atomize and spray the scrubbing liquid towards the lower section 246 of the scrubber 232.

Moreover, as previously noted, a power source 256 is configured to convert chemical energy to mechanical energy. In addition, flue gas is generated by the power source 256. In the embodiment depicted in FIG. 2, the power source 256 includes an exhaust unit 206. The exhaust unit 206 is configured to convey the flue gas generated by the power source to the scrubber 232. Further, the scrubber 232 is configured to receive the flue gas from the exhaust unit 206 of the power source 256 via the inlet 254. The scrubbing liquid sprayed by the spray bank 202 in the scrubber 232 is configured to absorb at least a portion of pollutants in the flue gas to produce at least a partially cleaned flue gas and an effluent fluid. In particular, the flue gas may include chemical pollutants in gaseous form and/or particulate matter. Further, the scrubbing liquid sprayed by the spray banks 202 captures the pollutants in the form of particulate matter via use of a mechanical mechanism. The pollutants in the gaseous form may diffuse through the gas liquid interface and either reacts chemically with the scrubbing liquid or physically dissolves in the scrubbing liquid. Further, the pollutants in the gaseous form and/or particulate matter settles down in the lower section 246 of the scrubber 232 along with the scrubbing liquid. The mixture of the pollutants and the scrubbing liquid that settles down in the lower section 246 is referred to as the effluent fluid. Further, at least partially cleaned flue gas 260 may flow upwards in the scrubber 232 and may exit the marine vessel 100 through the exhaust stack 106 (see FIG. 1).

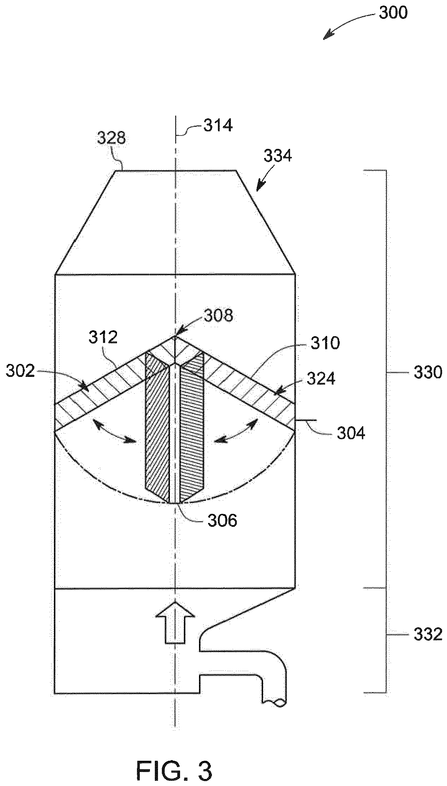

The mist eliminator 204 is configured to remove liquid droplets from the at least partially cleaned flue gas that is exiting the scrubber 232. In a presently contemplated configuration, the mist eliminator 204 is positioned proximate to the second end 238 of the upper section 240 of the scrubber 232. Also, the mist eliminator 204 is activated or deactivated along with the spray banks 202 based on an amount of pollutants in the flue gas received from the power source 256. In one example, if the amount of pollutants in the flue gas is above a threshold value, the spray banks 202 are activated to remove pollutants from the flue gas. Concurrently or subsequently, the mist eliminator 204 is activated to remove the liquid droplets from the at least partially cleaned flue gas. The aspect of activating and deactivating the spray banks 202 and the mist eliminator 204 will be described in greater detail with reference to FIG. 3.

As depicted in FIG. 2, the lower section 246 of the scrubber 232 is coupled to the first end 248 of the upper section 240 of the scrubber 232. It may be noted that the baffle section 250 and the inlet 254 of the lower section 246 are positioned within the first surface area of the first end 248 of the upper section 240. In particular, the baffle section 250 includes a first segment 208 and a second segment 210 that are operatively coupled to each other. In one embodiment, the first segment 208 and the second segment 210 of the baffle section 250 may be a single integrated structure. Further, the first segment 208 of the baffle section 250 includes a first end 212 that is coupled to the first end 248 of the upper section 240 of the scrubber 232. Also, the first end 212 of the first segment 208 has a first surface area that is the same as the first surface area of the first end 248 of the upper section 240.

Further, the first segment 208 of the baffle section 250 includes a second end 214 that is operatively coupled to the second segment 210 of the baffle section 250. Also, the second end 214 has a second surface area that is less than the first surface area of the first end 212 of the first segment 208 of the baffle section 250. In one example, the second surface area corresponding to the second end 214 may be in a range from about 30% to about 70% of the first surface area corresponding to the first end 212 of the first segment 208. In one embodiment, a peripheral wall corresponding to one side of the first segment 208 may be tapered to reduce the second surface area of the second end 214 of the first segment 208. This reduction in the second surface area of the second end 214 of the first segment 208 aids in creating a space below the upper section 240 of the scrubber 232. This space may be utilized for positioning the inlet 254 inward with reference to the peripheral wall of the upper section 240 of the scrubber 232. In particular, the baffle section 250 and the inlet 254 are positioned within a determined surface area that is less than or equal to the first surface area of the first end 248 of the upper section 240.

In a similar manner, the second segment 210 of the baffle section 250 includes a first end 216 that is operatively coupled to the second end 214 of the first segment 208.

Also, the first end 216 of the second segment 210 has an area that is equal to the second surface area of the second end 214 of the first segment 208. Further, the second segment 210 of the baffle section 250 includes a second end 218 that is operatively coupled to a liquid discharge unit 220. Also, the second end 218 of the second segment 210 has an area that is equal to the second surface area of the second end 214 of the first segment 208. Furthermore, the second segment 210 is configured to convey the effluent fluid to the liquid discharge unit 220 via the second end 218 of the second segment 210. Moreover, the first end 216 and the second end 218 of the second segment 210 have surface areas that are same as the second surface area of the second end 214 of the first segment 208. Also, these surface areas corresponding to the first end 216 and the second end 218 of the second segment 210 are less than the first surface area of the first end 248 of the upper section 240. As these surface areas of the second segment 210 are less than the first surface area of the first end 248 of the upper section 240, additional space is created adjacent to the baffle section 250 for effortlessly positioning the inlet 254 inward with reference to the peripheral wall of the upper section 240, thereby achieving a relatively compact configuration of the scrubber 232.

In addition, the inlet 254 is coupled to a side of the second segment 210, as depicted in FIG. 2. The inlet 254 includes a first end 224 and a second end 226. The first end 224 of the inlet 254 is coupled to the side of the second segment 210, while the second end 226 of the inlet 254 is coupled to an outlet 230 of the exhaust unit 206 of the power source 256. Moreover, the inlet 254 has a bent structure that is vertically coupled to the outlet 230 of the exhaust unit 206 and horizontally coupled to the second segment 210 of the baffle section 250. In one example, the bent structure may have an angle of about 90 degrees. Also, by using the bent structure for the inlet 254, the scrubbing liquid is prevented from flowing back to the exhaust unit 206 of the power source 256. In one embodiment, the inlet 254 may include a plurality of guide vanes 268 to maintain the flue gas flow distribution through the bent structure of the inlet 254. Additionally, use of the bent structure for the inlet 254 aids in positioning the power source 256 below the scrubber 232. As a result, the air quality control system 110 may be implemented in the marine vessels that have space constraints.

During the operation of the scrubber 232, the flue gas is supplied from the exhaust unit 206 of the power source 256 to the inlet 254 of the scrubber 232. Further, the inlet 254 conveys the flue gas to the baffle section 250 in the lower section 246 of the scrubber 232. In particular, the second segment 210 of the baffle section 250 receives the flue gas from the inlet 254 of the scrubber 232. As the second segment 210 is coupled to the first segment 208, the flue gas flows upward towards the first segment 208. Also, the flue gas diverges in the first segment 208 due to an increase in the volume of the first segment 208. The flue gas may further flow upward to the upper section 240 that is coupled to the first segment 208 of the baffle section 250. Also, the flue gas flows towards the series of spray banks 202 that is positioned at different levels in the upper section 240 of the scrubber 232.

As the flue gas flows upwards in the scrubber 232, the series of spray banks 202 is activated to spray the scrubbing fluid downwards from the upper section 240 of the scrubber 232 to the lower section 246 of the scrubber 232. Also, the scrubbing liquid absorbs at least the portion of the pollutants in the flue gas to produce the at least partially cleaned flue gas 260 and the effluent fluid.

Furthermore, the effluent fluid is collected at the lower section 246 of the scrubber 232 and channeled to the liquid discharge unit 220. Also, the liquid discharge unit 220 may convey this effluent fluid to an energy recovery device such as the energy recovery device 114 of FIG. 1. The energy recovery device may use kinetic energy of the received effluent fluid to operate a feed pump such as the feed pump 112 of FIG. 1 to convey or pump fresh scrubbing liquid to the scrubber 232.

Moreover, the at least partially cleaned flue gas 260 may flow towards the second end 238 of the upper section 240. The at least partially cleaned flue gas 260 may include liquid droplets due to an interaction of the scrubbing liquid with the flue gas. Hence, the mist eliminator 204 may be activated to remove these liquid droplets from the at least partially cleaned flue gas 260. Subsequent to the removal of the liquid droplets, the at least partially cleaned flue gas 260 may flow upwards to exit the scrubber 232 via the second end 238 of the scrubber 232. Further, the at least partially cleaned flue gas 260 may be released to the environment through the exhaust stack.

Referring to FIG. 3, a schematic side cross sectional view of another embodiment 300 of the scrubber 102 of FIG. 1, in accordance with aspects of the present specification, is depicted. In the example of FIG. 3, a scrubber 334 includes an upper section 330 and a lower section 332. Moreover, FIG. 3 depicts one example of a mist eliminator 324 such as the mist eliminator 204 of FIG. 2. For ease of understanding of the functioning of the mist eliminator 324, other components, such as spray banks are not depicted in FIG. 3.

The mist eliminator 324 is positioned above the spray banks (see FIG. 2) and proximate to a second end 328 of the upper section 330 of the scrubber 334. Also, the mist eliminator 324 is configured to remove liquid droplets from flue gas after at least a portion of pollutants is removed from the flue gas.

In one embodiment, the mist eliminator 324 may include wings 302 and an A-frame arrangement 308. The wings 302 are movable between a first position 304 and a second position 306. The first position 304 of the wings 302 may be an open position and the second position 306 of the wings 302 may be a closed position. Initially, the wings 302 are positioned in the closed position 306. Additionally, the wings 302 may include a first wing 310 and a second wing 312. The first wing 310 is coupled to one side of the A-frame arrangement 308, while the second wing 312 is coupled to the other side of the A-frame arrangement 308. In one example, the wings 310, 312 may be coupled to the A-frame arrangement 308 via a hinge to allow the wings 310, 312 to move between a corresponding first position 304 and a second position 306. Also, the wings 310, 312 include a plurality of vanes, where the vanes are positioned parallel to each other and coupled to each other using a series of rods or bolts. Further, when the wings 310, 312 are moved to the first position 304, these vanes are positioned at a determined inclination with respect to a central axis 314 of the scrubber 334 to provide better drainage of liquid droplets from the flue gas. It may be noted that the mist eliminator 324 may include other types of structure, and is not limited to the structure shown in FIG. 3.

During operation, the mist eliminator 324 is activated to open the wings 310, 312 and position these wings 310, 312 at the first position 304. Further, the vanes in the first and second wings 310, 312 interact with the flue gas to remove the liquid droplets from the flue gas. Also, upon removing the liquid droplets from the flue gas, at least partially cleaned flue gas may flow upwards to exit the scrubber 334 via the second end 328 of the scrubber 334. Further, the at least partially cleaned flue gas may be released to the environment through the exhaust stack of the marine vessel.

In a similar manner, if the mist eliminator 324 is deactivated, the wings 310, 312 are moved to the second position 306, thereby ceasing any interaction of the wings 310, 312 with the flue gas. More specifically, if the wings 302 are at the second position 306, the plurality of vanes in the first and second wings 310, 312 may be positioned parallel to the central axis 314 of the scrubber 334. As a result, the flue gas may directly flow towards the second end 328 of the upper section 330 of the scrubber 334.

Moreover, the mist eliminator 324 along with the spray banks are activated based on a concentration of the pollutants in the flue gas. In one embodiment, the spray banks such as the spray banks 202 of FIG. 2 are activated to spray the scrubbing liquid in the scrubber 334 to aid in removing at least a portion of the pollutants from the flue gas. Concurrently and/or subsequently, the mist eliminator 204 may be manually or automatically activated to transition the wings 310, 312 from the second, closed position 306 to the first, open position 304. In one example, the mist eliminator 324 may be activated by an actuator (not shown) that may be positioned external to the scrubber 334 and operatively coupled to the mist eliminator 324. In particular, the actuator may activate the mist eliminator 324 to transition the wings 310, 312 between the first and second positions 304, 306.

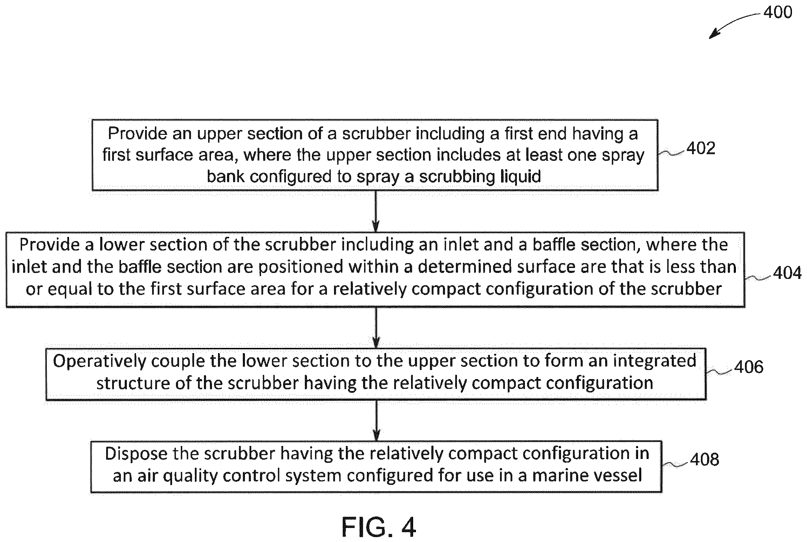

FIG. 4 is a flow chart illustrating a method 400 for engineering a relatively compact configuration of a scrubber of a reduced footprint such as the scrubber 102 of FIG. 1, in accordance with aspects of the present specification. For ease of understanding, the method 400 is described with reference to the components of FIGs. 1 and 2.

The method 400 begins at step 402, where the upper section 118 of the scrubber 102 is provided. The upper section 118 includes a first end 120 having a first surface area.

The first surface area is representative of an area occupied by the first end 120 of the upper section 118. Also, the upper section 118 includes at least one spray bank 202 that is configured to spray the scrubbing liquid. In one example, the scrubbing liquid includes seawater that is pumped using the feed pump 112 to the at least one spray bank 202 in the upper section 118 of the scrubber 102.

Subsequently, at step 404, the lower section 116 of the scrubber 102 is provided. The lower section 116 includes the inlet 124 that is configured to receive flue gas including pollutants from the exhaust unit 206 of the power source 104. Also, the lower section 116 includes the baffle section 122 that is configured to convey the received flue gas towards the at least one spray bank 202 in the upper section 118 to remove at least a portion of the pollutants from the flue gas. More particularly, the baffle section 122 and the inlet 124 are positioned within a determined surface area that is less than or equal to the first surface area of the first end 120 of the upper section 118 to achieve a relatively compact configuration of the scrubber 102. In one embodiment, the side of the first segment 208 of the baffle section 122 is tapered. Also, the surface areas corresponding to the first and second ends 216, 218 of the second segment 210 are configured to have an area that is the equal to the second surface area of the second end 214 of the first segment 208 to create a space below the upper section 118 of the scrubber 102. This space is less than or equal to the first surface area of the first end 120 of the upper section 118 of the scrubber 102 and is utilized for positioning the inlet 124 of the scrubber 102. Also, a combined space occupied by the baffle section 122 and the inlet 124 is less than or equal to the first surface area of the first end 120 of the upper section 118 of the scrubber 102. As a result, the footprint of the scrubber is reduced by achieving the relatively compact configuration of the scrubber 102, thereby allowing use of the scrubber 102 in the marine vessel.

Also, the inlet 124 has a bent structure that is vertically coupled to the outlet 230 of the exhaust unit 206 and horizontally coupled to the side of the second segment 210 of the baffle section 122. In one example, the bent structure may have an angle of about 90 degrees. Use of the bent structure for the inlet 124 aids in preventing the scrubbing liquid from flowing back to the exhaust unit 206 of the power source 104. Also, by using the bent structure for the inlet 124, the power source 104 may be positioned below the scrubber 102.

Subsequently, at step 406, the lower section 116 may be operatively coupled to the upper section 118 to form an integrated structure of the scrubber 102. The exemplary design of the lower section 116 where the inlet 124 and the baffle section 122 are positioned within the determined surface area that is less than or equal to the first surface area of the first end 120 of the upper section 118 aids in achieving the relatively compact configuration that reduces the footprint of the scrubber 102.

The scrubber 102 so formed may be disposed in an air quality control system 110, as indicated by step 408. Additionally, since the footprint of the scrubber 102 is reduced through the relatively compact configuration thereof, the exemplary scrubber 102 may be used in marine vessels that have space constraints.

The various embodiments of the scrubber and method for engineering a relatively compact configuration of a scrubber described hereinabove aid in removing pollutants from the flue gas. Also, by employing the methods and the various embodiments of the exemplary scrubber, space that is utilized for cleaning the flue gas may be substantially reduced. Furthermore, use of the exemplary scrubber and method advantageously aid in implementing an air quality control system in the marine vessels that have space constraints. Moreover, use of the exemplary scrubber and method aid in decreasing the risk of back flow of the scrubbing liquid from the scrubber to the power source, thereby preventing any damage to the power source. Also, the exemplary scrubber uses the mist eliminator based on the concentration of the pollutants in the flue gas, which in-turn improves the efficiency of the scrubber. In addition, with the exemplary structure of the scrubber, corrosion due to the flow of flue gas in the scrubber may be substantially reduced, which in-turn reduces the maintenance cost of the scrubber.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are disclosed in the following numbered clauses. Any features of any of the aspects and/or embodiments may be readily combined with one or more features of any other aspect or embodiment described herein.
1. A scrubber, comprising:
   an upper section comprising a first end having a first surface area, wherein the upper section comprises at least one spray bank configured to spray a scrubbing liquid;
   a lower section operatively coupled to the upper section and comprising:
      an inlet configured to receive flue gas comprising pollutants from an exhaust unit; and
      a baffle section operatively coupled to the inlet and configured to receive the flue gas from the inlet and convey the received flue gas towards the at least one spray bank in the upper section,
      wherein the baffle section and the inlet are positioned within a determined surface area for a relatively compact configuration of the scrubber, wherein the determined surface area is less than or equal to the first surface area of the first end of the upper section, and wherein the scrubbing liquid sprayed by the at least one spray bank is configured to remove at least a portion of the pollutants from the flue gas.
2. The scrubber of clause 1, wherein the baffle section comprises a first segment and a second segment operatively coupled to each other, wherein the first segment is operatively coupled to the first end of the upper section, and wherein the second segment is operatively coupled to the inlet and configured to convey the flue gas towards the at least one spray bank through the first segment of the baffle section.
3. The scrubber of clauses 1 or clause 2, wherein the first segment comprises:
   a first end having a first surface area; and
   a second end having a second surface area,
   wherein the second surface area of the second end of the first segment is less than the first surface area of the first end of the first segment.
4. The scrubber of any preceding clause, wherein the second segment comprises:
   a first end operatively coupled to the second end of the first segment, wherein the first end has a surface area equal to the second surface area of the second end of the first segment; and
   a second end operatively coupled to a liquid discharge unit, wherein the second end has a surface area equal to the second surface area of the second end of the first segment,
   wherein the surface area of the first end and the surface area of the second end of the second segment are smaller than the first surface area of the first end of the upper section.
5. The scrubber of any preceding clause, wherein the second segment is configured to convey at least the removed portion of the pollutants to the liquid discharge unit.
6. The scrubber of any preceding clause, wherein the inlet comprises a first end coupled to the second segment and a second end coupled to an outlet of the exhaust unit.
7. The scrubber of any preceding clause, wherein the upper section further comprises a second end opposite to the first end of the upper section and configured to receive the flue gas after at least the portion of the pollutants is removed from the flue gas.
8. The scrubber of any preceding clause, wherein the upper section further comprises a mist eliminator positioned proximate to the second end of the upper section and configured to remove liquid droplets from the flue gas after at least the portion of the pollutants is removed from the flue gas.
9. The scrubber of any preceding clause, wherein the mist eliminator is activated based on a concentration of the pollutants in the flue gas.
10. A method for engineering a relatively compact configuration of a scrubber in an air quality control system, the method comprising:
   providing an upper section comprising a first end having a first surface area, wherein the upper section comprises at least one spray bank configured to spray a scrubbing liquid;
   providing a lower section comprising an inlet and a baffle section, wherein the inlet and the baffle section are positioned within a determined surface area that is less than or equal to the first surface area for the relatively compact configuration of the scrubber; and
   operatively coupling the lower section to the upper section to form an integrated structure of the scrubber having the relatively compact configuration.
11. The method of clause 10, further comprising disposing the scrubber having the relatively compact configuration in the air quality control system, wherein the scrubber is configured to remove at least a portion of pollutants from a flue gas received from a power source.
12. The method of clause 10 or clause 11, further comprising:
   coupling a first segment of the baffle section to the first end of the upper section, wherein the first segment comprises a first end having a first surface area and a second end having a second surface area, and wherein the second surface area is less than the first surface area to reduce a footprint of the scrubber; and
   coupling a second segment of the baffle section to the inlet, wherein the second segment comprises a first end having a surface area equal to the second surface area and a second end having a surface area equal to the second surface area, and wherein the surface area of the first end and the surface area of the second end of the second segment are smaller than the first surface area of the first end of the upper section.
13. The method of any of clauses 10 to 12, further comprising:
   coupling the first end of the second segment to the second end of the first segment; and
   coupling the second end of the second segment to a liquid discharge unit.
14. The method of any of clauses 10 to 13, further comprising conveying, by the second segment, at least the removed portion of the pollutants in the flue gas to the liquid discharge unit.
15. The method of any of clauses 10 to 14, further comprising:
   coupling a first end of the inlet to the second segment; and
   coupling a second end of the inlet to an outlet of an exhaust unit.
16. The method of any of clauses 10 to 15, further comprising conveying the flue gas after removing at least the portion of the pollutants from the flue gas towards a second end of the upper section.
17. The method of any of clauses 10 to 16, further comprising positioning a mist eliminator proximate to the second end of the upper section to remove liquid droplets from the flue gas after removing at least the portion of the pollutants from the flue gas.
18. The method of any of clauses 10 to 17, further comprising activating the mist eliminator based on a concentration of the pollutants in the flue gas.
19. A system, comprising:
   a power source comprising an exhaust unit configured to convey a flue gas comprising pollutants;
   a scrubber positioned proximate the power source and comprising:
      an upper section comprising a first end having a first surface area, wherein the upper section comprises at least one spray bank configured to spray a scrubbing liquid;
      a lower section operatively coupled to the upper section and comprising:
         an inlet configured to receive the flue gas comprising pollutants from the exhaust unit; and
         a baffle section operatively coupled to the inlet and configured to receive the flue gas from the inlet and convey the received flue gas towards the at least one spray bank in the upper section,
         wherein the baffle section and the inlet are positioned within a determined surface area to reduce a footprint of the scrubber, wherein the determined surface area is less than or equal to the first surface area of the first end of the upper section, and wherein the scrubbing liquid sprayed by the at least one spray bank is configured to remove at least a portion of the pollutants from the flue gas.
20. The system of clause 19, wherein the inlet of the scrubber comprises a bent structure having a first end coupled to the baffle section and a second end coupled to an outlet of the exhaust unit.
21. The system of clause 19 or clause 20, wherein the second end of the inlet is positioned within the determined surface area to reduce the footprint of the scrubber.

## Claims

1. A scrubber, comprising:
an upper section comprising a first end having a first surface area, wherein the upper section comprises at least one spray bank configured to spray a scrubbing liquid;
a lower section operatively coupled to the upper section and comprising:
an inlet configured to receive flue gas comprising pollutants from an exhaust unit; and
a baffle section operatively coupled to the inlet and configured to receive the flue gas from the inlet and convey the received flue gas towards the at least one spray bank in the upper section,
wherein the baffle section and the inlet are positioned within a determined surface area for a relatively compact configuration of the scrubber, wherein the determined surface area is less than or equal to the first surface area of the first end of the upper section, and wherein the scrubbing liquid sprayed by the at least one spray bank is configured to remove at least a portion of the pollutants from the flue gas.

2. The scrubber of claim 1, wherein the baffle section comprises a first segment and a second segment operatively coupled to each other, wherein the first segment is operatively coupled to the first end of the upper section, and wherein the second segment is operatively coupled to the inlet and configured to convey the flue gas towards the at least one spray bank through the first segment of the baffle section.

3. The scrubber of claim 2, wherein the first segment comprises:
a first end having a first surface area; and
a second end having a second surface area,
wherein the second surface area of the second end of the first segment is less than the first surface area of the first end of the first segment.

4. The scrubber of claim 2 or claim 3, wherein the second segment comprises:
a first end operatively coupled to the second end of the first segment, wherein the first end has a surface area equal to the second surface area of the second end of the first segment; and
a second end operatively coupled to a liquid discharge unit, wherein the second end has a surface area equal to the second surface area of the second end of the first segment,
wherein the surface area of the first end and the surface area of the second end of the second segment are smaller than the first surface area of the first end of the upper section.

5. The scrubber of claim 4, wherein the second segment is configured to convey at least the removed portion of the pollutants to the liquid discharge unit.

6. The scrubber of any of claims 2 to 5, wherein the inlet comprises a first end coupled to the second segment and a second end coupled to an outlet of the exhaust unit.

7. The scrubber of any preceding claim, wherein the upper section further comprises a second end opposite to the first end of the upper section and configured to receive the flue gas after at least the portion of the pollutants is removed from the flue gas.

8. A method for engineering a relatively compact configuration of a scrubber in an air quality control system, the method comprising:
providing an upper section comprising a first end having a first surface area, wherein the upper section comprises at least one spray bank configured to spray a scrubbing liquid;
providing a lower section comprising an inlet and a baffle section, wherein the inlet and the baffle section are positioned within a determined surface area that is less than or equal to the first surface area for the relatively compact configuration of the scrubber; and
operatively coupling the lower section to the upper section to form an integrated structure of the scrubber having the relatively compact configuration.

9. The method of claim 8, further comprising disposing the scrubber having the relatively compact configuration in the air quality control system, wherein the scrubber is configured to remove at least a portion of pollutants from a flue gas received from a power source.

10. The method of claim 8 or claim 9, further comprising:
coupling a first segment of the baffle section to the first end of the upper section, wherein the first segment comprises a first end having a first surface area and a second end having a second surface area, and wherein the second surface area is less than the first surface area to reduce a footprint of the scrubber; and
coupling a second segment of the baffle section to the inlet, wherein the second segment comprises a first end having a surface area equal to the second surface area and a second end having a surface area equal to the second surface area, and wherein the surface area of the first end and the surface area of the second end of the second segment are smaller than the first surface area of the first end of the upper section.

11. The method of claim 10, further comprising:
coupling the first end of the second segment to the second end of the first segment; and
coupling the second end of the second segment to a liquid discharge unit.

12. The method of claim 10 or claim 11, further comprising:
coupling a first end of the inlet to the second segment; and
coupling a second end of the inlet to an outlet of an exhaust unit.

13. The method of any of claims 10 to 12, further comprising conveying the flue gas after removing at least the portion of the pollutants from the flue gas towards a second end of the upper section.

14. The method of any of claims 10 to 13, further comprising positioning a mist eliminator proximate to the second end of the upper section to remove liquid droplets from the flue gas after removing at least the portion of the pollutants from the flue gas.

15. A system, comprising:
a power source comprising an exhaust unit configured to convey a flue gas comprising pollutants;
a scrubber positioned proximate the power source and comprising:
an upper section comprising a first end having a first surface area, wherein the upper section comprises at least one spray bank configured to spray a scrubbing liquid;
a lower section operatively coupled to the upper section and comprising:
an inlet configured to receive the flue gas comprising pollutants from the exhaust unit; and
a baffle section operatively coupled to the inlet and configured to receive the flue gas from the inlet and convey the received flue gas towards the at least one spray bank in the upper section,
wherein the baffle section and the inlet are positioned within a determined surface area to reduce a footprint of the scrubber, wherein the determined surface area is less than or equal to the first surface area of the first end of the upper section, and wherein the scrubbing liquid sprayed by the at least one spray bank is configured to remove at least a portion of the pollutants from the flue gas.
